# EUROPEAN PATENT SPECIFICATION

(11) **EP 4 019 222 B1**
(45) Date of publication and mention of the grant of the patent: **18.12.2024**
(21) Application number: 21215440.5
(22) Date of filing: 17.12.2021
(51) Int. Cl.: B29C 43/20, B29C 43/18, B29C 43/00, B60R 13/02, B29C 65/00, B27N 5/00, B29C 70/08, B29C 70/46, B32B 3/26, B32B 3/28, B32B 5/26, B32B 7/04, B32B 7/08, B29K 301/12, B29K 311/00, B29C 43/40, B29K 105/08, B60R 13/08, B29K 223/00, B29L 31/30, B27N 3/04, B29C 70/10, B60R 13/01

(54) **COMPOSITE PANEL STRUCTURE FOR MOTOR VEHICLES AND THE LIKE MADE OF NATURAL FIBRES AND THERMOPLASTIC SYNTHETIC FIBRES**
VERBUNDPLATTENSTRUKTUR FÜR KRAFTFAHRZEUGE UND DERGLEICHEN AUS NATÜRLICHEN FASERN UND THERMOPLASTISCHEN SYNTHETISCHEN FASERN
STRUCTURE DE PANNEAU COMPOSITE POUR VÉHICULES À MOTEUR ET ANALOGUES EN FIBRES NATURELLES ET FIBRES SYNTHÉTIQUES THERMOPLASTIQUES

(30) Priority: 23.12.2020 IT 202000032078
(43) Date of publication of application: 29.06.2022
(73) Proprietor: STR Automotive S.R.L., 61122 Pesaro (IT)
(72) Inventor: Corraducci, Roberto, 61122 Pesaro (IT)
(74) Representative: Benedetti, Gianluca

(56) References cited:
- EP-A1- 3 679 105
- US-A- 4 157 415
- US-A- 5 076 870
- US-A1- 2001 000 584
- US-A1- 2010 264 698
- US-A1- 2019 389 097

## Description

### Field of the art

In the car and vehicle manufacturing industry in general, the so-called automotive industry, there are increasingly stringent regulations of ecological nature in terms of reducing emissions of carbon dioxide - CO₂ - during manufacturing and reducing the ecological impact relating to the disposal of the components upon obsolescence which, with reference to the accessories of the interior environments of the passenger compartment, have imposed a reduction in the ecological impact by at least 50%.

As a result, the manufacturers had to replace the plastics - mostly polyurethane which represented, with good functionality but considerable ecological impact at the end of their life cycle, the elements of the interior furnishing of the passenger compartments - with other materials and different manufacturing solutions.

In this context, a material - so-called NFPP (natural fibre and polypropylene) - available on the market as sheet material, or thin mat, non-woven fabric, composite made of natural fibres such as silk, flax, hemp and the like, and thermosetting synthetic thermoplastic fibres, usually polypropylene, have been used successfully.

This material is contingently heated to softening without reaching the liquefaction threshold and with limited CO₂ emission, so that the thermoplastic matrix amalgams the natural fibres, and from this condition - with an appropriate thermal rise - it is allowed to cool and then pressed between cold moulds which impart the desired shape thereto, obtaining - therefrom - rigid shaped sheets which, once the perimeter scraps have been removed therefrom and drilled - if required - to create areas of interruption functional to the final intended use, which can be carried out simultaneously with the moulding with the appropriate simultaneous scrap cutting and hole drilling action, directly constitute panels, biodegradable in direct proportion to the relative constituent percentage of natural fibres.

The panels thus obtained can be applied and used to obtain modelling shaped sheets and frame for lining the interior of the passenger compartments, frames for upholstery, frames for uprights, frames for dashboards, luggage compartments, accessories for seats and the like.

For example and particularly, in the specific application of such panels such as shaped moulding portions and frame of the inner lining of doors, but in general in any relative application, the prior art provides for the means for fixing such panels to the bodywork and the accessories associated thereto made of conventional plastic materials, since striving toward reducing CO₂ in the manufacturing stage and toward reducing the ecological impact at the end of life cycle is significantly limited and frustrated.

Some known technical solutions are disclosed in the U.S. patent applications US 2019/389097 A1 and US 2001/000584 A1.

### Objects of the invention

In this context, the main object of the present invention is to provide composite panels for shaped frames for interior upholstery for motor vehicles, made of natural fibre and polypropylene (so-called NFPP), or similar thermoplastic synthetic fibres, such not to require to be integrated with structural and furnishing accessories as well as fixing elements made of conventional non-biodegradable plastic materials, but self-sufficient and suitable to perform any and all functions without featuring any kind of plastic materials.

Another object of the present invention is to achieve the preceding object and at the same time to provide a panel which - in the specific application of an interior lining for doors - is suitable to carry out any and all fixing and support function, without the need for further applications of plastic materials both on the external front, with reference to the passenger compartment, and on the internal front.

Yet another object of the present invention is to achieve the preceding objects by means of a panel which does not subvert the methods for manufacturing composite panels made of natural fibres and polypropylene (so-called NFPP), or similar thermoplastic resins, according to the prior art, such not to require changes in the production lines but only supplementations.

Another object of the present invention is to achieve the preceding objects through a solution concept that is simple and efficient, safe in use and a relatively economic cost considering the results practically attainable therewith.

### Summary of the solution concept

These and other objects are all achieved with the polyfunctional self-supporting panel structure for use in the passenger compartment of a motor vehicle, particularly the interior parts of the passenger compartment of a motor vehicle or provide a frame for the upholstery of a motor vehicle or an accessory for the seats of a motor vehicle and the like, according to the present invention as defined by the claims, such panel structure comprising at least one first shaped panel made of natural fibre and polypropylene or other synthetic thermoplastic fibres; in said at least one first panel there being defined a first face and a second face juxtaposed to the first face; and at least one second shaped panel, made of natural fibre and polypropylene or other synthetic thermoplastic fibres; in said at least one second panel there being defined a third face and a fourth face juxtaposed to the third face; said at least one second panel comprising at least one portion shaped so as to form, at the fourth face, at least one protuberance carrying connection means so as to allow to connect, in use, said at least one second panel to a support component of a motor vehicle; wherein the at least one first panel and the at least one second panel are mutually joined at at least one respective peripheral area and/or at least one respective internal area so that the first face and the third face each other, and that the second face is directed, in use, in the passenger compartment of a motor vehicle, and that the fourth face faces, in use, said support component of the motor vehicle.

According to a particularly advantageous aspect of the present invention, the at least one protuberance can be made as a single piece in the at least one second panel.

Furthermore, according to the present invention, the at least one protuberance of the at least one second panel and a corresponding portion of the at least one first panel can form, jointly, an internal cavity between the at least one first panel and the at least one second panel.

Preferably, the at least one protuberance has a substantially frustoconical shape or a shape comprising one or more cylindrical portions.

According to the invention proposed herein, the connection means may comprise at least one through hole.

Conveniently, according to the invention, the connection means can be provided for in an apical position of the at least one protuberance.

Preferably, in the first face of said at least one first panel there is defined at least one first flat surface portion while in the third face of said at least one second panel there is defined at least one second flat surface portion joined to said at least one first flat surface portion.

Advantageously, said at least one first flat surface portion and said at least one second flat surface portion can be mutually joined by means of electrowelding.

Furthermore, the connection means may comprise at least one pin, at least one bushing, at least one clip or at least one similar element.

Preferably, according to the present invention, said at least one pin, at least one bushing, at least one clip or at least one similar element is engaged with said at least one through hole.

### Description of the attached drawings

Further characteristics and advantages of the composite panel structure according to the present invention shall be more apparent from the following detailed description of a preferred but non-exclusive relative embodiment, represented - solely by way of non-limiting example - in the eight attached drawings, wherein:
Figure 1 shows a lateral view of a first panel component designed to form the panel according to the present invention, to be understood as being positioned vertically with reference to the orientation references formulated in the present description text and in the claims that follow;
Figure 2 shows - in lateral view - a second panel component designed to form the panel according to the present invention, to be understood as being positioned vertically with reference to the orientation references formulated in the present description text and in the claims that follow;

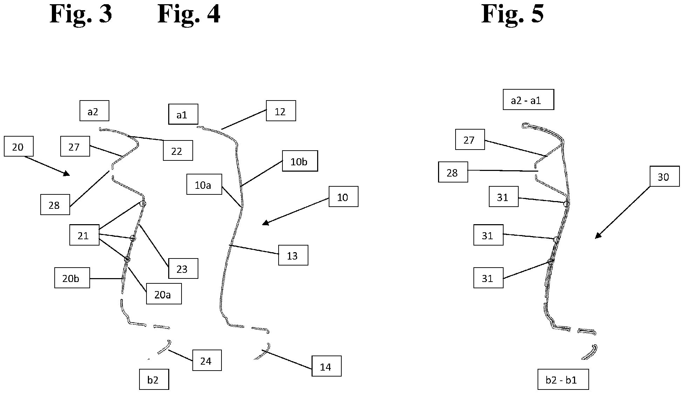

Figure 3 shows a cross-sectional view, along the line a²-b² of figure 2, of the second panel component of the present invention.
Figure 4 shows a cross-sectional view along the line a¹-b¹ of figure 1 of the first panel component according to the present invention.
Figure 5 shows a cross-sectional view, along the lines a² -b² and a¹-b¹ of figures 2 and 1, of a second and a first panel component according to the present invention, as joined to form the panel according to the present invention.

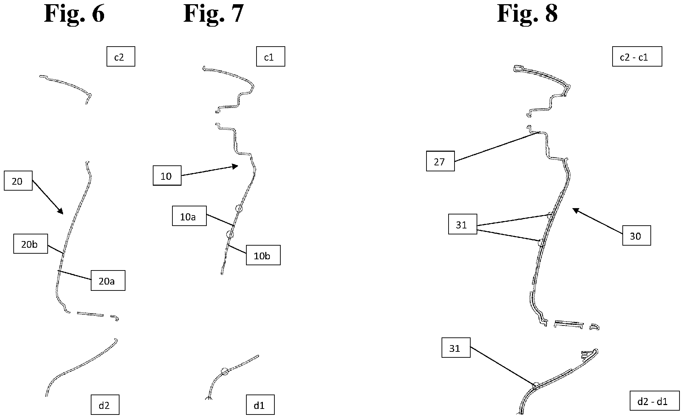

Figure 6 shows a cross-sectional view along the line c²-d² of figure 2, of the second panel component according to the present invention.
Figure 7 shows a cross-sectional view along the line c¹-d¹ of figure 1 of the first panel component according to the present invention.
Figure 8 shows a cross-sectional view along the lines c²-d² and c¹-d¹ of figures 2 and 1 of a second and a first panel component according to the present invention, as arranged side by side to be combined and joined;

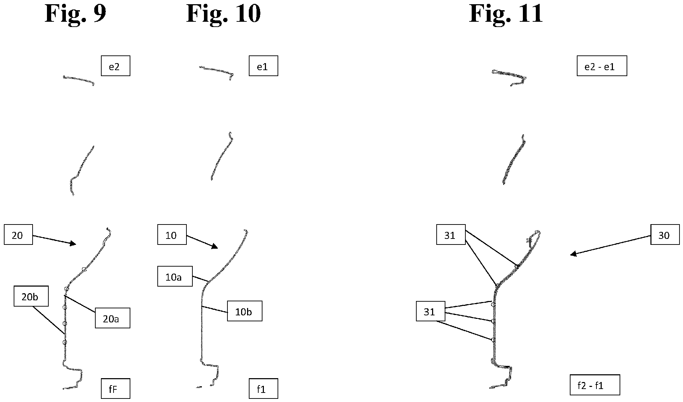

Figure 9 shows a cross-sectional view along the line e²-f² of figure 2, of the second panel component according to the present invention.
Figure 10 shows a cross-sectional view along the line and e¹-f¹ of figure 1 of the first panel component according to the present invention.
Figure 11 shows a cross-sectional view along the lines e²-f² and e¹-f¹ of figures 2 and 1 of a second and a first panel component according to the present invention, as joined to form the panel according to the present invention;

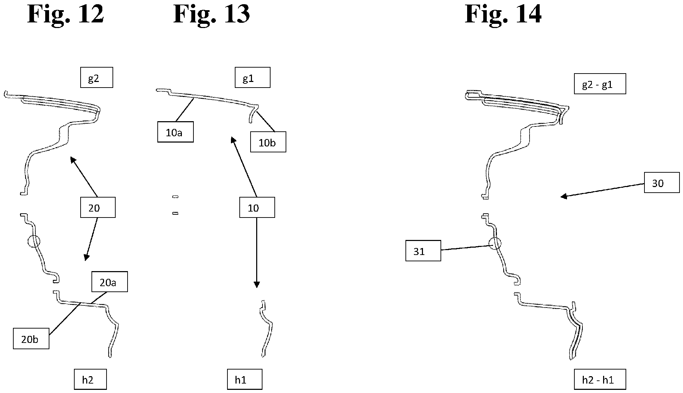

Figure 12 shows a cross-sectional view along the line g²-h² of figure 2, of the second panel component according to the present invention.
Figure 13 shows a cross-sectional view along the line and g¹-h¹ of figure 1 of the first panel component according to the present invention.
Figure 14 shows a cross-sectional view along the lines g²-h² and g¹-h¹ of figures 2 and 1 of a second and a first panel component according to the present invention, as joined to form the panel according to the present invention;

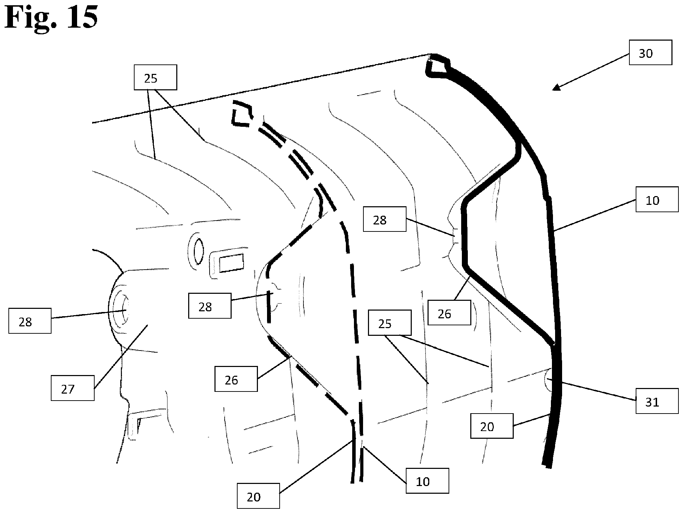

Figure 15 shows a partially cross-sectional perspective view of a first and a second panel component according to the present invention as joined to form the panel component according to the present invention;

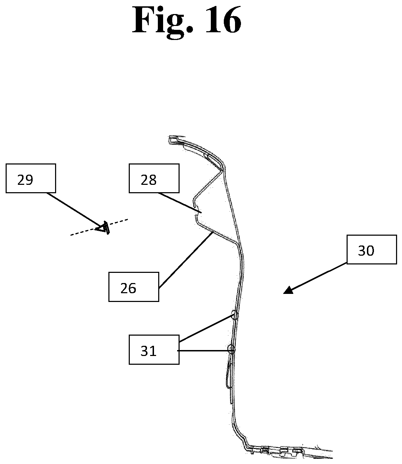

Figure 16 shows a cross-sectional view of detail of a first and a second panel component according to the present invention, as joined to form the panel according to the present invention;

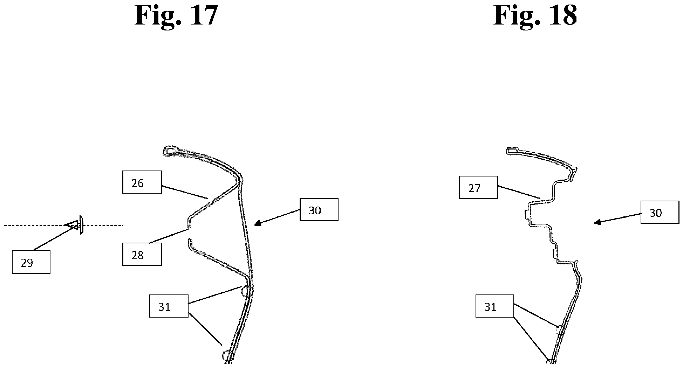

Figure 17 shows a cross-sectional view of another detail of a first and a second panel component according to the present invention as joined to form the panel according to the present invention and as adapted to a joining means according to the prior art.
Figure 18 shows a cross-sectional view of further detail of a first and a second panel component according to the present invention, as joined to form the panel according to the present invention;

### Static description of the embodiment

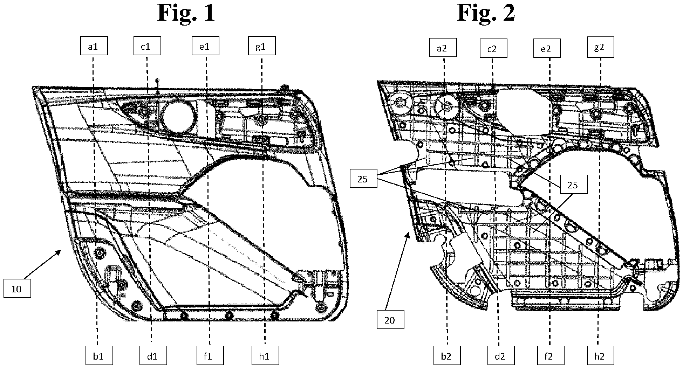

With reference to these figures and in particular to figures 1 and 2, a first and a second panel made of natural fibre and polypropylene (NFPP), obtained from non-woven fabric composite sheets, for example flax in this case, and a thermosetting synthetic thermoplastic fibre, for example polypropylene in this specific case, are respectively indicated with 10 and 20.

Such first 10 and second 20 panels shell be understood to be made according to the prior art, by means of homogeneous thermo-softening, without reaching thermo-melting, of the sheets they are made of and more specifically of the synthetic fibre which contributes to form them, for the purpose of combining them with the natural fibre which likewise contributes to forming them; subsequent cooling and then cold moulding under a press die and counter-die, with simultaneous or subsequent cutting of the scraps and possible interruptions on the relative extensions, in order to obtain a bas-relief shape, perimeter shape, dimensions and perforations desired to adapt to the shape of the door of the specific vehicle to be contingently fitted therewith as well as to the design - wholly or partly - that the shape shall outline.

In terms of identifying location, in the present description text and in the claims that follow, an orientation criterion will be used, referring to the passenger compartment of the vehicle, such that the first panel 10 will be identified as the interior and the second panel 20 will be identified as the exterior panel.

The first panel 10 or interior panel is structurally similar to the panels forming the frame for accessories and upholstery of the doors of the passenger compartment of motor vehicles according to the prior art; the second panel or exterior panel 20, made using the same implementation technique as the first, but innovatively structured to be twinned with the first panel and to carry out all the functions in terms of assembly and fitting of the elements made of plastic materials according to the prior art, is entirely made of the innovative matter of the present invention.

To this end, the second panel 20 tends to have the highest number possible of upper 22, median 23 and lower 24 extension portions facing each other in complementary adherence, i.e. twinned in contact, with upper 12, median 13 and lower 14 extension portions of the first panel 10, in order to double in as many points as possible the thickness of the single panel structure 30 that the relative joining contributes to form, in order to achieve the greatest possible strength and value of the frame of the panel structure 30 obtained by the parallel twinning.

Such parallel twinning is fixed by mutual heat sealing of the panels 10 and 20 it is made of, preferably carried out through points 11 and 21, with mutual joining and fixing by means of heat-sealing having a simple or compound technical morphology, achieved using any type and kind of heat-sealing device suitable for the purpose wherein the two panels 10 and 20 are in mutual contact, facing each other in a parallel fashion and preferably, for the sake of simplicity of implementation, between the flat parallel portions 23-13 rather than the arched portions 22-12 and 24-14, as shown in the figures of the twin-panelled structure 30, where the sealing points are indicated with 31.

Specifically, in the first panel 10 or interior panel there are defined a first face 10a and a second face 10b opposite such first face 10a and designed to face, in the configuration of use, toward the passenger compartment of the motor vehicle.

The second panel or exterior panel 20 instead has a third face 20a, which is directed toward the aforementioned first face 10a as a result of the aforementioned twinning, and a fourth face 20b opposite to said third face 20a and designed to face toward the component of the motor vehicle as an anchoring element for the twin-panelled structure 30.

Furthermore, the second panel 20 or exterior panel preferably has, where possible, a preferably reticular ribbing 25, which - in any case - are mutually intersected so as to strengthen the panel 20 and the panel structure 30 in its entirety.

Where it does not adhere to the first panel 10, the extension of the second panel 20 or exterior panel is shaped as a bas-relief, in order to obtain outer portions as bas-relief to act as an armrest, slots for the translation of the glass window pane, seats for arranging loudspeakers, seats for lock actuation handles, seats for electric control panels, seats for nozzles for ventilation, heating and air conditioning system, interspaces for housing components and projections 26 - 27 for the direct support of fixing means 29 on the sheet of the bodywork.

In particular, said projections 26 - 27 are formed by shaping the second panel 20 or the exterior panel or they are formed as a single piece with the latter, projecting from the relative fourth face 20b.

These projections may have any shape and structure suitable for the purpose, but they are preferably frusto-conical 26 or cylindrical 27 (in particular made of one or more cylindrical portions) with apical holes 28 for the top insertion of the usual fixing pieces used in the industry consisting of pins 28; all this without the need for adding plastic material according to the prior art and for the functions which are described below.

### Dynamic description of the embodiment

Thus, having completed the static description of a preferred embodiment of the composite panel structure according to the present invention, following is the dynamic description of the same, i.e. the relative operation.

The first panel or interior panel 10 and the second panel or exterior panel 20 are manufactured according to the prior art, shaped and dimensioned according to the contingent application;
in the embodiment described, the first panel or interior panel 10 is substantially similar to the panels according to the prior art, while the second panel or exterior panel 20 differs from that of the prior art in that it does not exist in the embodiments according to the prior art.

As a matter fact, the second panel 20 faces toward the outside of the passenger compartment and it has - in the bas-relief configuration thereof and in particular in the projections and protrusions - all the shapes forming the body and frame and/or means for fixing to the sheet of the bodywork and for the accessories embedded therein and/or projecting and fixed thereto.

In this manner, the second panel carry out the functions which, according to the prior art, are currently carried out by plastics fixed to the first and only panel, substantially doubling the recyclability characteristics of the reference parts it is made of.

### Alternative embodiments

It is obvious that in further alternative embodiments still falling within the innovation concept subject of the embodiment illustrated above and claimed below, the composite panel structure according to the present invention, may be implemented through equivalent technical and mechanical solutions, i.e. provided with further supplementary solutions, just like - in the claimed scope - all elements they are made of may vary in a manner suitable for the purpose and adapted to the specific conformation and structure.

In particular, though the described embodiment refers to interior accessories for doors, the solution of the twin panels made of NFPP can be used for manufacturing any portion of the interior furniture frame of the interior of passenger compartments of the vehicles entirely eliminating or at least radically reducing pure plastics.

### Advantages of the invention

As observable from the preceding detailed description of a preferred embodiment, the composite panel structure according to the present invention, offers advantages corresponding to the attainment of these and other preset objects:
as a matter fact, it achieves a proactive innovation which:
on the one hand, results in total or radical reduction of the use of plastics in the manufacture of the interior furnishing components of the passenger compartments of vehicles;
on the other hand, uses a process with a negative carbon dioxide emission balance, while reducing the use of plastic materials and glues.

With the further significant advantage of the considerable weight reduction that comes from the replacement of heavy plastics with the light panel for the same functions.

### KEY TO REFERENCE NUMBERS

- 10): first panel (panel inside the passenger compartment)
- 10a): first face of the first panel (panel inside the passenger compartment)
- 10b): second face of the first panel (panel inside the passenger compartment)
- 11): welding spots in the first panel
- 12): upper extension portions first panel in contact with second panel
- 13): median extension portions first panel in contact with second panel
- 14): lower extension portions first panel in contact with second panel
- 20): second panel (panel outside the passenger compartment)
- 20a): third face of the second panel (panel outside the passenger compartment)
- 20b): fourth face of the second panel (panel outside the passenger compartment)
- 21): welding spots in the second panel
- 22): upper extension portions second panel in contact with first panel
- 23): median extension portions second panel in contact with first panel
- 24): lower extension portions second panel in contact with first panel
- 25): reticular ribbing second panel
- 26): frustoconical projections second panel
- 27): cylindrical projections second panel
- 28): frustoconical and cylindrical projections second panel second panel for pins
- 29): pins
- 30): double or twinned panel structure (heat-sealed two-panel combination)
- 31): welding spots in the double or twinned panel

## Claims

1. Polyfunctional self-supporting panel structure (30) for use in the passenger compartment of a motor vehicle, particularly for lining internal parts of the passenger compartment of a motor vehicle or for providing a frame for the upholstery of a motor vehicle or an accessory for the seats of a motor vehicle and the like, said panel structure (30) being **characterised in that** it comprises:
at least one first panel (10), which is shaped and made of natural fibres and, polypropylene or other synthetic thermoplastic fibres; in said at least one first panel (10) there being defined a first face (10a) and a second face (10b) juxtaposed to the first face (10a); and
at least one second panel (20), which is shaped and made of natural fibres and, polypropylene or other thermoplastic synthetic fibres; in said at least one second panel (20) there being defined a third face (20a) and a fourth face (20b) juxtaposed to the third face (20a); said at least one second panel (20) comprising at least one portion shaped so as to form, at the fourth face (20b), at least one protuberance (26, 27) carrying connection means (28, 29) to allow to connect, in use, said at least one second panel (20) to a support component of a motor vehicle;
wherein the at least one first panel (10) and the at least one second panel (20) are mutually joined at at least one respective peripheral area and/or at least one respective inner area so that the first face (10a) and the third face (20a) face each other, and that the second face (10b) is directed, in use, towards the internal of the passenger compartment of a motor vehicle, and that the fourth face (20b) faces, in use, said support component of the motor vehicle.

2. Panel structure (30) according to claim 1, **characterised in that** the at least one protuberance (26, 27) is made as a single piece in the at least one second panel (20).

3. Panel structure (30) according to the preceding claims, **characterised in that** the at least one protuberance (26, 27) of the at least one second panel (20) and a corresponding portion of the at least one first panel (10) form, jointly, an internal cavity between the at least one first panel (10) and the at least one second panel (20).

4. Panel structure (30) according to the preceding claims, **characterised in that** the at least one protuberance (26, 27) has a substantially frustoconical shape or a shape comprising one or more cylindrical portions.

5. Panel structure (30) according to the preceding claims, **characterised in that** the connection means comprise at least one through hole (28).

6. Panel structure (30) according to the preceding claims, **characterised in that** the connection means (28, 29) are provided for in an apical position of the at least one protuberance (26, 27).

7. Panel structure (30) according to the preceding claims, **characterised in that** in the first face (10a) of said at least one first panel (10) there is defined at least one first flat surface portion and **in that** in the third face (20a) of said at least one second panel (20) there is defined at least one second flat surface portion joined to said at least one first flat surface portion.

8. Panel structure (30) according to the preceding claim, **characterised in that** said at least one first flat surface portion and said at least one second flat surface portion are mutually joined by means of electrowelding.

9. Panel structure (30) according to the preceding claims, **characterised in that** the connection means comprise at least one pin (29), at least one bushing or at least one clip.

10. Panel structure (30) according to claims 5 and 9, **characterised in that** said at least one through hole (28) is engaged with said at least one pin (29), at least one bushing or at least one clip.

## Patentansprüche

1. Polyfunktionale, selbsttragende Plattenstruktur (30) zur Verwendung in dem Fahrgastraum eines Kraftfahrzeugs, insbesondere zum Verkleiden von Innenteilen des Fahrgastraums eines Kraftfahrzeugs oder zum Bereitstellen eines Rahmens für die Polsterung eines Kraftfahrzeugs oder eines Zubehörs für die Sitze eines Kraftfahrzeugs und dergleichen, wobei die Plattenstruktur (30) **dadurch gekennzeichnet ist, dass** sie Folgendes umfasst:
mindestens eine erste Platte (10), die geformt ist und aus Naturfasern und Polypropylen oder anderen synthetischen thermoplastischen Fasern gefertigt ist; wobei in der mindestens einen ersten Platte (10) eine erste Fläche (10a) und eine zweite Fläche (10b), die an die erste Fläche (10a) angrenzt, definiert sind; und
mindestens eine zweite Platte (20), die geformt ist und aus Naturfasern und Polypropylen oder anderen thermoplastischen Kunstfasern gefertigt ist; wobei in der mindestens einen zweiten Platte (20) eine dritte Fläche (20a) und eine vierte Fläche (20b), die an die dritte Fläche (20a) angrenzt, definiert sind, die mindestens eine zweite Platte (20) umfassend mindestens einen Abschnitt, der geformt ist, um an der vierten Fläche (20b) mindestens einen Vorsprung (26, 27) zu bilden, der Verbindungseinrichtungen (28, 29) trägt, um im Gebrauch die mindestens eine zweite Platte (20) mit einer Trägerkomponente eines Kraftfahrzeugs zu verbinden;
wobei die mindestens eine erste Platte (10) und die mindestens eine zweite Platte (20) an mindestens einem jeweiligen Umfangsbereich und/oder mindestens einem jeweiligen Innenbereich miteinander verbunden sind, sodass die erste Fläche (10a) und die dritte Fläche (20a) einander zugewandt sind, und dass die zweite Fläche (10b) im Gebrauch in das Innere des Fahrgastraums eines Kraftfahrzeugs gerichtet ist, und dass die vierte Fläche (20b) im Gebrauch der Trägerkomponente des Kraftfahrzeugs zugewandt ist.

2. Plattenstruktur (30) nach Anspruch 1, **dadurch gekennzeichnet, dass** der mindestens eine Vorsprung (26, 27) als ein einziges Stück in der mindestens einen zweiten Platte (20) gefertigt ist.

3. Plattenstruktur (30) nach den vorherigen Ansprüchen, **dadurch gekennzeichnet, dass** der mindestens eine Vorsprung (26, 27) der mindestens einen zweiten Platte (20) und ein entsprechender Abschnitt der mindestens einen ersten Platte (10) gemeinsam einen inneren Hohlraum zwischen der mindestens einen ersten Platte (10) und der mindestens einen zweiten Platte (20) bilden.

4. Plattenstruktur (30) nach den vorherigen Ansprüchen, **dadurch gekennzeichnet, dass** der mindestens eine Vorsprung (26, 27) eine im Wesentlichen kegelstumpfförmige Form oder eine Form, die einen oder mehrere zylindrische Abschnitte umfasst, aufweist.

5. Plattenstruktur (30) nach einem der vorherigen Ansprüche, **dadurch gekennzeichnet, dass** die Verbindungseinrichtungen mindestens ein Durchgangsloch (28) umfassen.

6. Plattenstruktur (30) nach den vorherigen Ansprüchen, **dadurch gekennzeichnet, dass** die Verbindungseinrichtungen (28, 29) in einer apikalen Position des mindestens einen Vorsprungs (26, 27) bereitgestellt sind.

7. Plattenstruktur (30) nach den vorherigen Ansprüchen, **dadurch gekennzeichnet, dass** in der ersten Fläche (10a) der mindestens einen ersten Platte (10) mindestens ein erster flacher Oberflächenabschnitt definiert ist und dass in der dritten Fläche (20a) der mindestens einen zweiten Platte (20) mindestens ein zweiter flacher Oberflächenabschnitt definiert ist, der mit dem mindestens einen ersten flachen Oberflächenabschnitt verbunden ist.

8. Plattenstruktur (30) nach dem vorherigen Anspruch, **dadurch gekennzeichnet, dass** der mindestens eine erste flache Oberflächenabschnitt und der mindestens eine zweite flache Oberflächenabschnitt mittels Elektroschweißen miteinander verbunden sind.

9. Plattenstruktur (30) nach einem der vorherigen Ansprüche, **dadurch gekennzeichnet, dass** die Verbindungseinrichtungen mindestens einen Stift (29), mindestens eine Buchse, mindestens eine Klammer umfassen.

10. Plattenstruktur (30) nach den Ansprüchen 5 und 9, **dadurch gekennzeichnet, dass** das mindestens eine Durchgangsloch (28) mit dem mindestens einen Stift (29), der mindestens einen Buchse, der mindestens einen Klammer in Eingriff ist.

## Revendications

1. Structure de panneau autoportante polyfonctionnelle (30) destinée à être utilisée dans l'habitacle d'un véhicule automobile, en particulier pour le revêtement des parties internes de l'habitacle d'un véhicule automobile ou pour réaliser un cadre destiné au rembourrage d'un véhicule automobile ou d'un accessoire des sièges d'un véhicule automobile et équivalent, ladite structure de panneau (30) étant **caractérisée en ce qu'**elle comprend :
au moins un premier panneau (10), formé et constitué de fibres naturelles et de polypropylène ou d'autres fibres thermoplastiques synthétiques ; dans ledit au moins un premier panneau (10) il est défini une première face (10a) et une deuxième face (10b) juxtaposée à la première face (10a) ; et
au moins un deuxième panneau (20), formé et constitué de fibres naturelles et de polypropylène ou d'autres fibres synthétiques thermoplastiques ; dans ledit au moins un deuxième panneau (20) il est défini une troisième face (20a) et une quatrième face (20b) juxtaposée à la troisième face (20a) ; ledit au moins un deuxième panneau (20) comprenant au moins une portion configurée de manière à former, au niveau de la quatrième face (20b), au moins une protubérance (26, 27) portant des moyens de connexion (28, 29) pour permettre de connecter, en utilisation, ledit au moins un deuxième panneau (20) à un élément de support d'un véhicule automobile ;
dans laquelle au moins un premier panneau (10) et au moins un deuxième panneau (20) sont reliés mutuellement sur au moins une zone périphérique respective et/ou au moins une zone intérieure respective de sorte que la première face (10a) et la troisième face (20a) se font face, et que la deuxième face (10b) est orientée, en cours d'utilisation, vers l'intérieur de l'habitacle d'un véhicule automobile, et que la quatrième face (20b) soit orientée, en cours d'utilisation, vers ledit élément de support du véhicule automobile.

2. Structure de panneau (30) selon la revendication 1, **caractérisée en ce que** l'au moins une protubérance (26, 27) est réalisée en une seule pièce dans l'au moins un deuxième panneau (20).

3. Structure de panneau (30) selon les revendications précédentes, **caractérisée en ce que** l'au moins une protubérance (26, 27) de l'au moins un deuxième panneau (20) et une portion correspondante de l'au moins un premier panneau (10) forment conjointement une cavité interne entre l'au moins un premier panneau (10) et l'au moins un deuxième panneau (20).

4. Structure de panneau (30) selon les revendications précédentes, **caractérisée en ce que** l'au moins une protubérance (26, 27) a une forme sensiblement tronconique ou une forme comportant une ou plusieurs parties cylindriques.

5. Structure de panneau (30) selon les revendications précédentes, **caractérisée en ce que** les moyens de connexion comprennent au moins un trou débouchant (28).

6. Structure de panneau (30) selon les revendications précédentes, **caractérisée en ce que** les moyens de connexion (28, 29) sont prévus dans une position apicale de l'au moins une protubérance (26, 27).

7. Structure de panneau (30) selon les revendications précédentes, **caractérisée en ce que** dans la première face (10a) dudit au moins un premier panneau (10) il est défini au moins une première portion de surface plane et **en ce que** dans la troisième face (20a) dudit au moins un deuxième panneau (20) il est défini au moins une deuxième portion de surface plane jointe à ladite au moins une première portion de surface plane.

8. Structure de panneau (30) selon la revendication précédente, **caractérisée en ce que** ladite au moins une première portion de surface plane et ladite au moins une deuxième portion de surface plane sont mutuellement reliées par électrosoudure.

9. Structure de panneau (30) selon les revendications précédentes, **caractérisée en ce que** les moyens de connexion comprennent au moins une goupille (29), au moins une douille, au moins une pince.

10. Structure de panneau (30) selon les revendications 5 et 9, **caractérisée en ce que** ledit au moins un trou débouchant (28) est engagé avec ladite au moins une goupille (29), au moins une douille, au moins une pince.
